# EUROPEAN PATENT SPECIFICATION

(11) **EP 3 256 341 B1**
(45) Date of publication and mention of the grant of the patent: **15.06.2022**
(21) Application number: 16707967.2
(22) Date of filing: 12.02.2016
(51) Int. Cl.: B60L 5/04, B60L 5/40, B60M 1/34

(54) **CONTACTING DEVICE AND RAPID CHARGING SYSTEM**
SCHNELLE LADEANORDNUNG FÜR FAHRZEUGE MIT ELEKTRISCHEM ANTRIEB
DISPOSITIF DE CONTACT ET SYSTÈME DE CHARGE RAPIDE

(30) Priority: 12.02.2015 PL 41125115
(43) Date of publication of application: 20.12.2017
(73) Proprietor: EC Engineering Spólka Z Ograniczona Odpowiedzialnoscia, 30-150 Krakow (PL)
(72) Inventor: LASIEWICZ, Bartosz, 31-261 Kraków (PL); DABROWSKI, Kamil, 31-851 Kraków (PL); BOGACKI, Dominik, 32-545 Psary (PL)
(74) Representative: AOMB Polska Sp. z.o.o.
(86) International application number: PCT/IB2016/050760
(87) International publication number: WO 2016/128939

(56) References cited:
- WO-A1-2012/118422
- JP-A- 2014 131 475
- US-A- 3 983 978
- US-A- 4 603 237
- US-B1- 6 805 226

## Description

The invention relates to a system consisting of devices allowing for service-free and rapid charging or partial recharging an electrically powered vehicle by connecting a current collector installed on the vehicle to a charging station which is a part of a transport infrastructure. The system is intended for charging electric or hybrid electric vehicles, or any type of electrically powered vehicles, equipped with devices for electric energy storage, such as rechargeable cells (batteries) or ultracapacitors. The system is intended particularly for urban and suburban buses with an electric or hybrid electric drive.

Systems and methods allowing for rapid charging of batteries of electrically powered vehicles while traveling via a defined route are known in the art, while charging of the vehicle's batteries takes place with short time intervals in the moment when the vehicle stops at a bus stop or at the starting or final terminals. Charging of batteries is most often realized using a current collector (e.g. pantograph) and a charging station installed within a bus stop.

International Patent Application No. WO2011079215 discloses a charging system and method for an electrical vehicle. The system is composed of a charging station located within the vehicle stop. The station has a current collector, in the form of a frame structure equipped with conductive pads, suspended on a vertical pole using a charging mount or a pivoting connector arm. In one of the alternative embodiments, the current collector has two collector braces oriented along the vehicle's axis. The braces have half-open V-shaped tips and spacing elements which facilitate establishing an electric contact and clamping the braces onto conductive copper bars or rails located longitudinally on the vehicle's roof. The braces are equipped with carbon conductive pads. In another embodiment of the invention, there is a funnel-shaped guiding element on the vehicle's roof, having a protruding fin in the narrower section of the funnel. The broader section of the funnel directed towards the front end of the vehicle is intended for guiding the current collector's head, while the rail constitutes a padded element for establishing an electric connection with the current collector's head equipped with carbon brushes.

Another International Patent Application No. WO2012118422 discloses a charging system for an electrically powered vehicle at substations located along the vehicle's route. On the vehicle's roof, a current collector is installed, equipped with a fin-shaped or blade-shaped collector pan or slide with carbon brushes, the collector being connected to a lengthwise guide which is a part of fixed infrastructure of the substation, oriented in the direction of the vehicle's travel. The guide has a shape of a rectangular pipe with open ends and a slot in the bottom wall, where the slide moves through the slot. In the inner space of the guide, conductive rails for establishing an electric contact with the slide are located.

Another International Patent Application No. WO2011064596 discloses a charging station for vehicles equipped with an electric drive and batteries. The station has charging elements in the form of a lengthwise rail, electrically isolated from one another and oriented in the direction of the longitudinal axis of the vehicle, the elements being suspended on two vertical poles via transverse arms. Two pantographs located on the vehicle's roof in a tandem layout are being connected to the charging elements.

US3983978A discloses a current collector assembly like a pantograph having four pivots coupled in pairs. The pivots of each pair are opposite to each other. Current collecting shoes are attached to two pivots. A spring is also disposed between pivots to urge them to each other and force the current collecting shoes to springily contact the electric cables.

JP2014131475A discloses a current collecting device having a pivoting arm and a charging head installed on said arm. The charging head is held in V-shaped groove for establishing electric contact. The charging head employs multiple axis of rotation to connect parts and employs movable electric contacts. Such a structure is very complicated.

Known solutions require a precise approach to the charging station. Some of these solutions prevent the vehicle from tilting during loading or during its approach, rendering connection of the contacting elements significantly harder or precluding charging when there are bumps in the road's surface. Majority of current solutions requires the vehicle to stop before charging commencement, additionally prolonging the duration of the process of charging the batteries.

The object of the invention is therefore to provide a system which will eliminate disadvantages of known solutions and allow for easy connecting of external devices of a charging system. Another object of the invention is to provide a solution which is cheap and user-friendly, and requires only minimum degree of intervention from a driver, while limiting the possibility of the devices not being connected.

The object is achieved by the contacting device of independent claim 1. A rapid charging system including such a device is also claimed. Preferred embodiments are disclosed in the corresponding dependent claims.

The rapid charging system according to a preferred embodiment, allows for connecting the charging devices while maintaining a big orientation tolerance for the vehicle in the charging zone. The connection process starts and ends before the vehicle stops, offering a possibility of an earlier initiation of the charging process. Moreover, the charging may also be continued while leaving the charging zone. Thanks to the extension of the charging time without holding up the use of the vehicle, the number of batteries or rechargeable cells and their weight may be reduced, leading further to the reduction of energy consumption and a possibility to transport a larger load or a higher number of goods or passengers. By the application of rotatable contacting elements of the head and a multi-jointed installation of the arm of the head, a possibility to tilt the vehicle and change its position during charging were provided. The design of the collector's head provides a continuous mating with the conduit of the charging station while tilted from the perpendicular, and a rotation in the horizontal plane.

Intervention of the driver in the operation of the system is reduced to minimum, and the system allows for charging the batteries of the vehicle with no adverse effect on the vehicle's operation during the drive (without elongation of stopovers at the stops, with a possibility to charge the vehicle with passengers onboard).

The subject of the invention will now become apparent after a careful reading of the detailed description with appropriate reference to the accompanying drawings, in which:

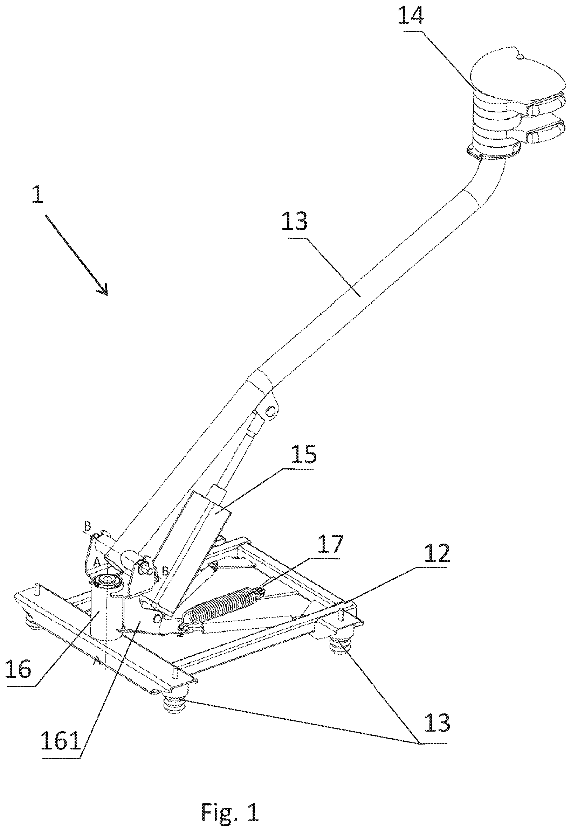

Fig. 1 shows an isometric view of the collector;

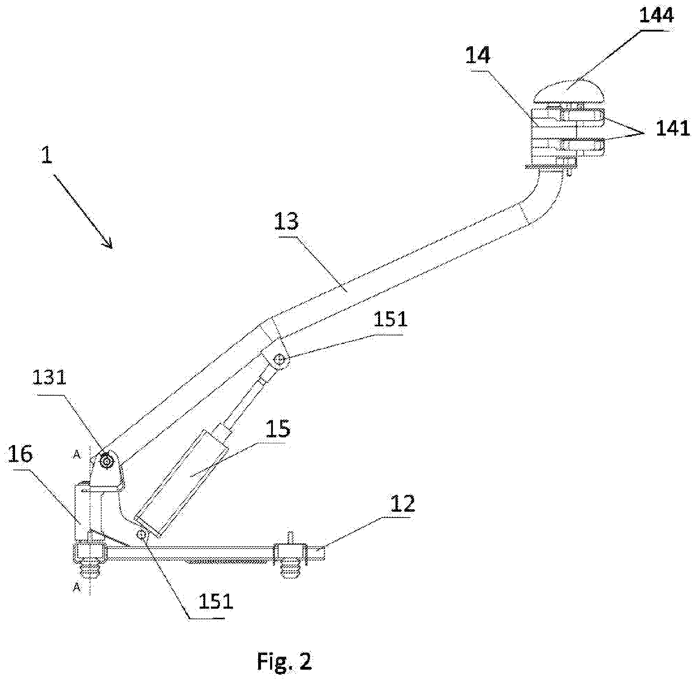

Fig. 2 shows an end view of the collector;

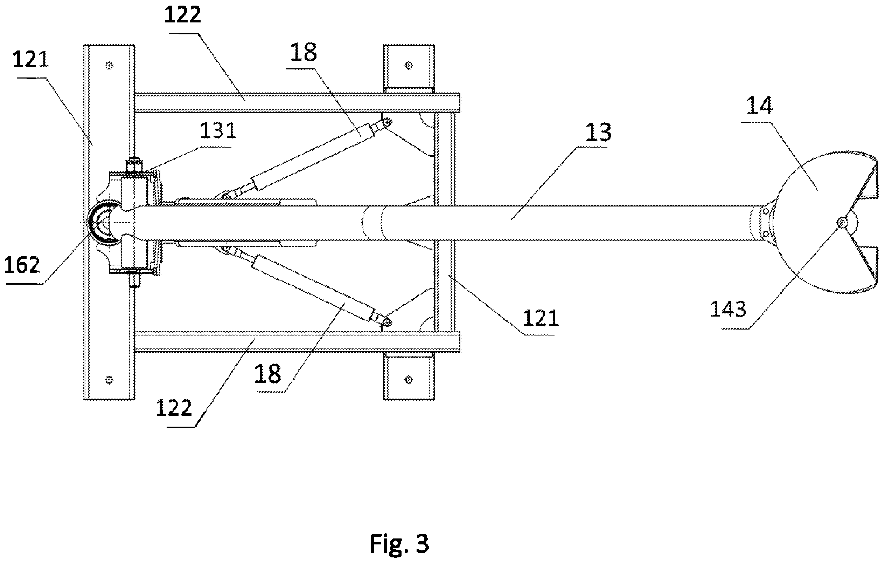

Fig. 3 shows a top view of the collector;

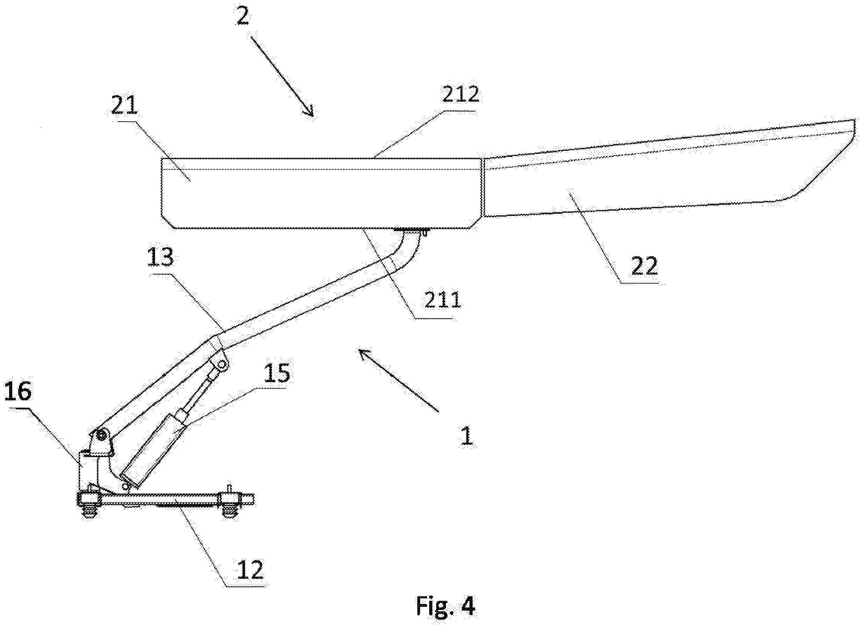

Fig. 4 shows an end view of the system with the head connected;

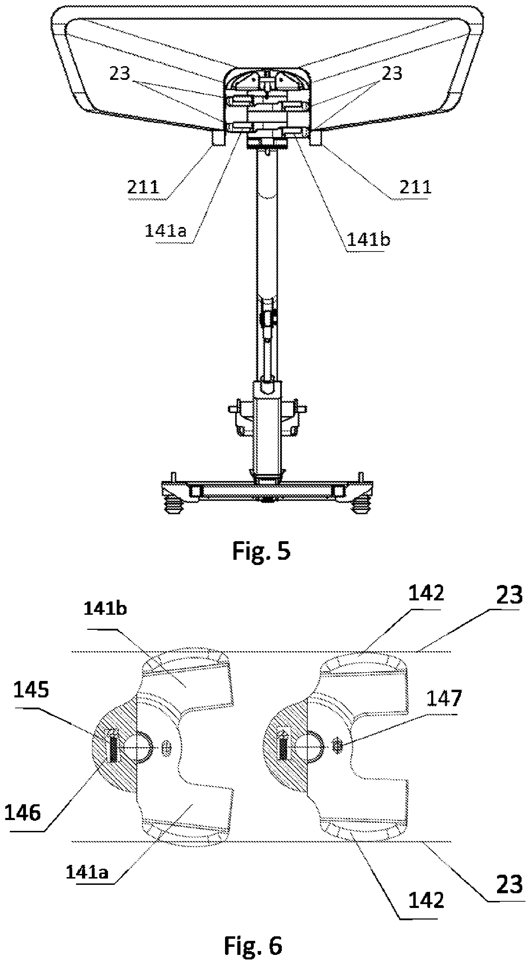

Fig. 5 shows a front view of the system of connected devices;
Fig. 6 shows the locations of the pressing elements with electric contacts before connecting the head with the conduit and when the devices are connected.

A rapid charging system is designed for charging vehicles equipped with an electric drive, including hybrid electric vehicles, which may be powered from sources storing electric energy, such as batteries or ultracapacitors. The system is designed particularly for, but not limited to, urban buses or trucks. In one aspect of application, the system is intended for being a part of the public transport infrastructure, where an urban bus travels cyclically on a defined route, stopping on stops which have charging stations within them. These stations allow for rapid charging of the bus batteries without a necessity to interrupt the travel or stop for a long time.

The rapid charging system for vehicles equipped with an electric drive according to the invention, has two main components: - a stationary part in the form of charging station 2, having lengthwise conductive conduit 21 and guiding funnel 22, charging station 2 being a part of transport infrastructure, and -a connecting part in the form of current collector 1 on the vehicle side. Stationary part 2 consists of lengthwise conductive conduit 21 and guiding funnel 22. Connecting part 1 on the vehicle consists of rotatably mounted raising arm 13, with charging head 14 installed on the top acting as a slider. It shall be obvious and understandable for a person skilled in the art that this configuration may be inverted maintaining the ability to perform its planned functions. Namely, the collector may be an element of the charging station, while the connecting part in the form of the lengthwise charging conduit may be placed on the vehicle's roof.

Charging station 2 is located in the vicinity of a bus stop. The connecting part of station 2 may be installed on a vertical pole or mast and on a transverse beam using a fixed or movable holder. The connecting part may be also installed on the bus stop canopy. The mounting of station 2 may also have other possible forms. The connecting part of station 2 for head 14 of current collector 1 is located in the zone where the bus stops, preferably at the longitudinal axis of the bus. The connecting part of station 2 has guiding funnel 22 elastically suspended on a supporting structure, which minimizes the adverse effect of impacts of head's 14 of collector 1 into its surfaces. Funnel 22 has a 'V' shape with sides bent downwards and it is oriented angularly upwards, in order to minimize the risk of missing of collector's head 14 or its disconnection caused by an inaccurate approach or a height difference. Then, funnel 22 is connected with charging conduit 21 having a shape of a rectangular pipe with an open bottom. Conduit 21 is located in parallel to the direction of the bus travel. Side walls 211 of conduit 21 have at least two electrically conductive surfaces 23 at their internal side, having a form of copper strips or conductive pads, which extend along the walls 211 of conduit 21, and are electric contacts for corresponding pressing elements 141 in head 14. Moreover, conductive contact strip 23 for control contact 143 located in the upper part of head 14 may be placed along upper wall 212 of conduit 21 at its internal side. In the example shown, conduit 21 has two conductive contact strips 23 along each of side walls 211 and one strip 23 along upper wall 212. These contacts are responsible for the individual poles of the device: grounding, positive contact, negative contact, control contact, etc. Electric current is transmitted to conductive contact surfaces 23 of charging station 2 via conductors from the electric grid or any other source of energy, for instance a conventional one or an alternative one. Station 2 may also be equipped with additional means for positioning of the connecting part, facilitating a proper mutual arrangement of the devices of the system.

In one practical embodiment of the invention, current collector 1 has rectangular frame 12 consisting of transverse members 121 and longitudinal members 122, and being at least electrically insulated from the vehicle's roof. Additionally, frame 12 may be insulated using vibration insulators 19 combined in one system with the electric insulators. In frame 12, arm (spar) 13 terminated with charging head 14 is connected by a self-aligning (in the vertical and horizontal planes) bearing to one of the transverse members 121. In other embodiments, collector 1 may be constructed in another known way, for instance as a double-arm pantograph, a pantograph based on a parallelogramic structure, or a single-arm pantograph. Arm 13 of current collector 1 is mounted using a jointed connection on two perpendicular rotation axes A, B and connected by a bearing to transverse shaft 131 and vertical pivot 162, enabling operation in vertical and horizontal planes. In one practical embodiment, arm 13 is pivotally connected with a turnover device 16 by the transverse axis B, while the turnover device 16 is connected by a bearing at the vertical axis A to the frame 12 of the current collector 1, while a raising drive 15 is mounted between the turnover device 16 and the pivoting arm 13 using a jointed connection 151, 152. The raising drive 15 may also be selected from other known solutions, such as a gas spring, an electric actuator or pneumatic bellows. The turnover device 16 is connected by a bearing centrally on a vertical pivot 162 of the transverse member 121. Moreover, the turnover device 16 has an inward bracket 161, with which one end of the actuator 15 is connected by the joint 152. The assembly has additionally spring 17, which is connected using a joint to the turnover device by one end 16 beyond the vertical rotation axis A of turnover device 16, with the axis of spring 17 running through the vertical rotation axis A of turnover device 16, while the other end of spring 17 is connected using a joint with frame 12 of collector 1. Two dampers 18 are fixed askew and using a joint by one end to bracket 161 of turnover device 16, and by the other end - to frame 12 of collector 1 beyond the vertical rotation axis A of turnover device 16. Spring 17 and dampers 18 serve the purpose of damping of vibrations and displacements in the horizontal plane.

A connecting device is mounted on the end of arm 13 of collector 1. The connecting device has electrically conductive surfaces for establishing an electric contact with corresponding electric conductive surfaces situated in charging conduit 21. The connecting device comprises a head 14 having at least two electric contacts 142 mounted on at least two pressing elements 141, while one of these is a positive electrode, a the other - a negative electrode. Electric contacts 142 may be in the form of carbonic pads, carbon pads, brushes, copper strips or other known conductive elements which may be replaceable. Pressing elements 141 are rotatably mounted around a rotation axis and pressed down to do at least two conductive contact strips 23 of charging station 2, located at the opposite sides of the rotation axis of pressing elements 141, providing a continuous mating with conduit 21 of charging station 2 while tilting from the vertical, and rotation in the horizontal plane. In the example shown, head 14 has two pairs of pressing elements 141a, 141b and control contact 143 in the upper oval part of head 144. The pressing elements of a given pair 141a, 141b are directed to the opposite side, towards contact conductive strips 23 of charging conduit 2. Moreover, adjacent pressing elements 141a, 141b are coupled with spring 145 situated between them so as to the elements push off from one another. Spring 145 is located in pocket 146 and rests on surfaces of adjacent pressing elements 141a, 141b. Additionally, there is limiter 147 situated between adjacent pressing elements 141a, 141b, the limiter having a form of a small mandrel passing through a whole in pressing element 141, defining the working range of electric contacts 142 in the plane perpendicular to the rotation axis with a value of ±50 mm. Electric cables are connected to electric contacts 142, the cables transmitting the current to the batteries of a bus or other electric devices.

When the bus approaches a bus stop which has charging station 2 located within, the first stage of the process occurs, consisting in raising of arm 13 with head 14 to a defined height. Raising of arm 13 may be initiated by a driver of the bus by pressing a corresponding switch-key, or it may be initiated automatically by the system, which detects presence of the devices in a certain area. In order to raise arm 13 automatically, the system may be equipped with a proper elements consisting of sensors, a controller and actuators. The system will allow for detecting the presence of the approaching vehicle based on defined values and will initiate raising of arm 13 with head 14. The applied sensors may be for instance infrared sensors or other motion sensors (emitting and receiving ultrasound or electromagnetic waves). Moreover, the elements of the system may communicate with one another using the Bluetooth wireless communication standard, NFC close range communication standard, RFID, Z-Wave, ZigBee or WiFi. Also, the devices may communicate using the satellite Global Positioning System (GPS).

Then, when arm 13 is raised to a proper height, the bus enters a zone where conductive conduit 21 is located. Most often, this zone is located in the bus stop bay. It may render the connection of the devices more difficult, when head 14 runs at an angle basically parallel to the direction of travel of the bus or in parallel to the roadway. Application of elastically suspended funnel 22 facilitates guiding of head 14 to conductive conduit 21. When head 14 is introduced to conduit 21, pressing elements 141 with electric contacts 142 slot correspondingly into the geometry of conduit 21 and they abut conductive contact strips 23 thanks to their rotatable connection and to the expanding force of spring 145 located between them. During the use of a vehicle, often unforeseen situations occur, when the vehicle is not able to approach the zone under the conduit ideally, because, e.g., its place is blocked by another vehicle, or there is a breach formed in the road, causing a tilt of the approaching bus. Moreover, in the moment when the doors are opened, buses are tilted to their side, in order to make it easier for the passengers to leave or enter the bus. Because of this situation, arm 13 of current collector 1 is mounted using a jointed connection on two perpendicular rotation axes A, B and connected by a bearing to transverse shaft 131 and vertical pivot 162, enabling operation in vertical and horizontal planes. During the departure of the vehicle from the stop, the charging process may be continued to the moment, when head 14 reaches the end of the charging zone in conductive conduit 21. With a proper time advance, the control system of the assembly of devices will receive a signal informing that head 14 approaches the end of the zone in which head 14 remains in contact with conductive contact strips 23 of conductive conduit 21, and the charging process will be terminated automatically. As head 14 leaves conductive conduit 21, the system folds arm 13 of current collector 1 automatically and switches to driving mode.

In one aspect of the invention, the contacting device for establishing an electric contact with the lengthwise conductive conduit having electrically conductive surfaces, comprises head 14 having at least two oppositely situated electric contacts 142 mounted on at least two pressing elements 141 rotatably mounted around a rotation axis and pressed down to at least two conductive contact surfaces 23 of conductive conduit 21. Adjacent pressing elements 141a, 141b are coupled with spring 145 situated between them so as to the elements push off from one another. Spring 145 is located in pocket 146 and rests on surfaces of adjacent pressing elements 141a, 141b. Moreover, there is limiter 147 situated between adjacent pressing elements 141a, 141b, defining a limited working range of electric contacts 142 in the plane perpendicular to the rotation axis.

The system according to the present invention may constitute also an element of the entire system of rapid charging of vehicles. Elements of such a system include: a vehicle equipped with at least electric drive, a device for storage of electric energy, and a current collector with a charging head according to the invention. Then, on the side of the transport infrastructure, the system has at least one charging station according to the invention, located along the travel route. The entire process of rapid charging is controlled and operated by an integrated control system.

## Claims

1. A contacting device, for establishing electric contact with a lengthwise conductive conduit (21) oriented along a horizontal plane and comprising conductive contact strips (23) extending along side walls of the conductive conduit (21), wherein the device comprises a head (14) having at least two oppositely situated electric contacts (142) mounted on at least two pressing elements (141), **characterized in that** said pressing elements (141) are rotatably mounted around a rotation axis which runs in a vertical plane perpendicular to the conductive contact strips (23) in such a way that when pressed down to the conductive contact strips (23) of the conductive conduit (21) located at the opposite sides of the rotation axis, the pressing elements (141) rotate in the horizontal plan until providing a continuous mating with the conductive conduit (21).

2. A contacting device, according to claim 1, wherein the pressing elements (141a, 141b) are coupled with a spring (145) situated between them so as to the pressing elements push off from one another.

3. A contacting device, according to claim 2, wherein the spring (145) is located in a pocket (146) and rests on surfaces of the pressing elements (141a, 141b).

4. A contacting device, according to claim 1 or 2 or 3, wherein there is a limiter (147) situated between the pressing elements (141a, 141b) and defining a limited working range of the electric contacts (142) in the plane perpendicular to the rotation axis by a value of up to ±50 mm.

5. A rapid charging system for a vehicle equipped with an electric drive, said system comprising a current collector (1) adapted to be installed on a vehicle and equipped with a drive (15) for its raising or lowering and with at least one pivoting arm (13) with a contacting device, the system further comprises a charging station (2) in a form of a lengthwise conductive conduit (21) with a guiding funnel (22) for electric connection of the contacting device, said charging station (2) is oriented substantially in the direction of the longitudinal axis of the vehicle and being a part of a transport infrastructure, **characterized in that** the contacting device is according to any of the claims from 1 to 4.

6. A rapid charging system, according to claim 5, wherein the head (14) has an oval sliding element (144) in its upper part, the sliding element being guided by the funnel (22) to the conductive conduit (21) to the zone with the conductive contact strips (23).

7. A rapid charging system, according to claim 5 or 6, wherein the head (14) has one or more pairs of the mating pressing elements (141).

8. A rapid charging system, according to any of the preceding claims from 5 to 7, wherein the pivoting arm (13) of the current collector (1) is mounted using a jointed connection on a frame electrically insulated from the vehicle, on two perpendicular rotation axes (A, B), enabling operation in vertical and horizontal planes.

9. A rapid charging system, according to claim 5 or 8, wherein the pivoting arm (13) is pivotally connected with a turnover device (16) by the transverse axis (B), while the turnover device (16) is connected by a bearing at the vertical axis (A) with the frame (13) of the collector (1), while a raising actuator (15) is mounted between the turnover device (16) and the arm (13) using a jointed connection.

10. A rapid charging system, according to claim 9, wherein the turnover device (16) is connected using a joint with one end of a spring (17) beyond the vertical rotation axis (A) of the turnover device (16), with the axis of the spring (17) running through the vertical rotation axis (A) of the turnover device (16), while the other end of the spring (17) is connected using a joint with the frame (12) of the collector (1).

11. A rapid charging system, according to claim 9 or 10, wherein in a neutral position, the turnover device (16) is connected with two springs placed symmetrically, with axes intersecting in a point away from the vertical axis (A) of the turnover device (16) and located in the plane perpendicular to the horizontal rotation axis (B) of the turnover device (16).

12. A rapid charging system, according to any of the preceding claims from 9 to 11, wherein two dampers (18) are fixed askew and using joint to the turnover device (16) by one end, and by the other end - to the frame (12) of the collector (1) beyond the vertical rotation axis (A) of the turnover device (16).

## Patentansprüche

1. Kontaktierungsvorrichtung zum Herstellen eines elektrischen Kontakts mit einer längs verlaufenden leitenden Rohrleitung (21), die entlang einer horizontalen Ebene ausgerichtet ist und leitende Kontaktstreifen (23) umfasst, die sich entlang von Wänden der leitenden Rohrleitung (21) erstrecken, wobei die Vorrichtung einen Kopf (14) mit mindestens zwei gegenüberliegenden elektrischen Kontakten (142) umfasst, die an mindestens zwei Druckelementen (141) angebracht sind, **dadurch gekennzeichnet, dass** die Druckelemente (141) drehbar um eine Drehachse montiert sind, die in einer vertikalen Ebene senkrecht zu den leitenden Kontaktstreifen (23) verläuft, so dass, wenn sie auf die leitenden Kontaktstreifen (23) der leitenden Rohrleitung (21) gedrückt werden, die sich auf den gegenüberliegenden Seiten der Drehachse befinden, die Druckelemente (141) in der horizontalen Ebene rotieren, bis sie eine kontinuierliche Verbindung mit der leitenden Rohrleitung (21) herstellen.

2. Kontaktierungsvorrichtung nach Anspruch 1, wobei die Druckelemente (141a, 141b) mit einer dazwischen liegenden Feder (145) gekoppelt sind, so dass sich die Druckelemente voneinander abstoßen.

3. Kontaktierungsvorrichtung nach Anspruch 2, wobei die Feder (145) in einer Tasche (146) angeordnet ist und auf Oberflächen der Druckelemente (141a, 141b) aufliegt.

4. Kontaktierungsvorrichtung nach Anspruch 1 oder 2 oder 3, wobei zwischen den Druckelementen (141a, 141b) ein Begrenzer (147) angeordnet ist, der einen begrenzten Arbeitsbereich der elektrischen Kontakte (142) in der Ebene senkrecht zur Drehachse um einen Wert von bis zu ±50 mm definiert.

5. Schnellladesystem für ein mit einem elektrischen Antrieb ausgestattetes Fahrzeug, wobei das System einen Stromabnehmer (1) umfasst, der zum Einbau in ein Fahrzeug geeignet ist und mit einem Antrieb (15) zum Anheben oder Absenken desselben und mit mindestens einem Schwenkarm (13) mit einer Kontaktierungsvorrichtung ausgestattet ist, das System ferner eine Ladestation (2) in Form einer längs verlaufenden leitenden Rohrleitung (21) mit einem Führungstrichter (22) für den elektrischen Anschluss der Kontaktierungsvorrichtung umfasst, wobei die Ladestation (2) im Wesentlichen in Richtung der Längsachse des Fahrzeugs ausgerichtet ist und Teil einer Verkehrsinfrastruktur ist, **dadurch gekennzeichnet, dass** die Kontaktierungsvorrichtung nach einem der Ansprüche 1 bis 4 ausgebildet ist.

6. Schnellladesystem nach Anspruch 5, wobei der Kopf (14) in seinem oberen Teil ein ovales Gleitelement (144) aufweist, das durch den Trichter (22) zur leitenden Leitung (21) in den Bereich mit den leitenden Kontaktstreifen (23) geführt wird.

7. Schnellladesystem nach Anspruch 5 oder 6, wobei der Kopf (14) ein oder mehrere Paare der zusammenpassenden Druckelemente (141) aufweist.

8. Schnellladesystem nach einem der vorhergehenden Ansprüche 5 bis 7, wobei dass der Schwenkarm (13) des Stromabnehmers (1) mit Hilfe einer Gelenkverbindung an einem vom Fahrzeug elektrisch isolierten Rahmen auf zwei senkrechten Drehachsen (A, B) montiert ist, die einen Betrieb in vertikalen und horizontalen Ebenen ermöglichen.

9. Schnellladesystem nach Anspruch 5 oder 8, wobei der Schwenkarm (13) über die Querachse (B) schwenkbar mit einer Wendevorrichtung (16) verbunden ist, während die Wendevorrichtung (16) über ein Lager an der Hochachse (A) mit dem Rahmen (13) des Stromabnehmers (1) verbunden ist, wobei zwischen der Wendevorrichtung (16) und dem Arm (13) ein Hubantrieb (15) gelenkig gelagert ist.

10. Schnellladesystem nach Anspruch 9, wobei die Wendevorrichtung (16) über ein Gelenk mit einem Ende einer Feder (17) jenseits der vertikalen Drehachse (A) der Wendevorrichtung (16) verbunden ist, wobei die Achse der Feder (17) durch die vertikale Drehachse (A) der Wendevorrichtung (16) verläuft, während das andere Ende der Feder (17) über ein Gelenk mit dem Rahmen (12) des Stromabnehmers (1) verbunden ist.

11. Schnellladesystem nach Anspruch 9 oder 10, wobei die Wendevorrichtung (16) in einer neutralen Position mit zwei symmetrisch angeordneten Federn verbunden ist, deren Achsen sich in einem von der vertikalen Achse (A) der Wendevorrichtung (16) entfernten Punkt schneiden und in der Ebene senkrecht zur horizontalen Drehachse (B) der Wendevorrichtung (16) liegen.

12. Schnellladesystem nach einem der vorhergehenden Ansprüche 9 bis 11, wobei zwei Dämpfer (18) schräg und mit einem Ende an der Wendevorrichtung (16) und mit dem anderen Ende am Rahmen (12) des Strombnehmers (1) über die vertikale Drehachse (A) der Wendevorrichtung (16) hinaus befestigt sind.

## Revendications

1. Un dispositif de contact, pour établir un contact électrique avec un conduit conducteur longitudinal (21) orienté le long d'un plan horizontal et comprenant des bandes de contact conductrices (23) s'étendant le long des parois du conduit conducteur (21), où le dispositif comprend une tête (14) ayant au moins deux contacts électriques (142) situés de manière opposée montés sur au moins deux éléments de pression (141), **caractérisé en ce que** lesdits éléments de pression (141) sont montés de manière rotative autour d'un axe de rotation qui s'étend dans un plan vertical perpendiculaire aux bandes de contact conductrices (23) de telle sorte que lorsqu'ils sont pressés vers le bas sur les bandes de contact conductrices (23) du conduit conducteur (21) situées sur les côtés opposés de l'axe de rotation, les éléments de pression (141) tournent dans le plan horizontal jusqu'à fournir un accouplement continu avec le conduit conducteur (21).

2. Un dispositif de contact selon la revendication 1, dans lequel les éléments de pression (141a, 141b) sont couplés à un ressort (145) situé entre eux de manière à ce que les éléments de pression se repoussent l'un de l'autre.

3. Un dispositif de contact, selon la revendication 2, dans lequel le ressort (145) est situé dans une poche (146) et repose sur les surfaces des éléments de pression (141a, 141b).

4. Un dispositif de contact, selon la revendication 1 ou 2, ou 3, dans lequel il y a un limiteur (147) situé entre les éléments de pression (141a, 141b) et définissant une plage de travail limitée des contacts électriques (142) dans le plan perpendiculaire à l'axe de rotation d'une valeur allant jusqu'à ±50 mm.

5. Un système de charge rapide pour un véhicule équipé d'un entraînement électrique, ledit système comprenant un collecteur de courant (1) adapté pour être installé sur un véhicule et équipé d'un entraînement (15) pour son élévation ou son abaissement et d'au moins un bras pivotant (13) avec un dispositif de contact, le système comprend en outre une station de charge (2) sous la forme d'un conduit conducteur longitudinal (21) avec un entonnoir de guidage (22) pour la connexion électrique du dispositif de contact, ladite station de charge (2) est orientée sensiblement dans la direction de l'axe longitudinal du véhicule et fait partie d'une infrastructure de transport, **caractérisé en ce que** le dispositif de contact est selon l'une quelconque des revendications 1 à 4.

6. Un système de charge rapide selon la revendication 5, dans lequel la tête (14) a un élément coulissant ovale (144) dans sa partie supérieure, l'élément coulissant étant guidé par l'entonnoir (22) vers le conduit conducteur (21) vers la zone avec les bandes de contact conductrices (23).

7. Un système de charge rapide selon la revendication 5 ou 6, où la tête (14) a une ou plusieurs paires d'éléments de pression accouplés (141).

8. Un système de charge rapide selon l'une quelconque des revendications précédentes 5 à 7, dans lequel le bras pivotant (13) du collecteur de courant (1) est monté par connexion articulée sur un cadre isolé électriquement du véhicule, sur deux axes de rotation perpendiculaires (A, B), permettant un fonctionnement dans des plans verticaux et horizontaux.

9. Un système de charge rapide selon la revendication 5 ou 8, dans lequel le bras pivotant (13) est relié de manière pivotante à un dispositif de retournement (16) par l'axe transversal (B), tandis que le dispositif de retournement (16) est relié par un palier au niveau de l'axe vertical (A) au cadre (13) du collecteur (1), tandis qu'un actionneur de levage (15) est monté entre le dispositif de retournement (16) et le bras (13) en utilisant une connexion articulée.

10. Un système de charge rapide selon la revendication 9, dans lequel le dispositif de retournement (16) est relié par une articulation à une extrémité d'un ressort (17) au-delà de l'axe de rotation vertical (A) du dispositif de retournement (16), l'axe du ressort (17) passant par l'axe de rotation vertical (A) du dispositif de retournement (16), tandis que l'autre extrémité du ressort (17) est reliée par une articulation au cadre (12) du collecteur (1).

11. Un système de charge rapide selon la revendication 9 ou 10, dans lequel dans une position neutre, le dispositif de retournement (16) est relié à deux ressorts placés symétriquement, avec des axes se coupant en un point éloigné de l'axe vertical (A) du dispositif de retournement (16) et situés dans le plan perpendiculaire à l'axe de rotation horizontal (B) du dispositif de retournement (16).

12. Un système de charge rapide selon l'une quelconque des revendications précédentes 9 à 11, dans lequel deux amortisseurs (18) sont fixés de travers et à l'aide d'une articulation au dispositif de retournement (16) par une extrémité, et par l'autre extrémité - au cadre (12) du collecteur (1) au-delà de l'axe de rotation vertical (A) du dispositif de retournement (16).
